# FASCICULE DE BREVET EUROPEEN

(11) **EP 2 585 410 B1**
(45) Date de publication et mention de la délivrance du brevet: **09.10.2019**
(21) Numéro de dépôt: 11726835.9
(22) Date de dépôt: 23.06.2011
(51) Int. Cl.: C03C 17/245, C03C 17/34, C03C 17/36, E06B 3/66, E06B 3/67, E06B 9/24

(54) **VITRAGE ISOLANT**
ISOLIERVERGLASUNG
INSULATING GLAZING

(30) Priorité: 24.06.2010 BE 201000375
(43) Date de publication de la demande: 01.05.2013
(73) Titulaire: AGC Glass Europe, 1348 Louvain-la-Neuve (BE)
(72) Inventeur: PESCE, Lorenzo, B-6040 Jumet (BE); TIXHON, Eric, B-6040 Jumet (BE)
(74) Mandataire: Le Vaguerèse, Sylvain Jacques
(86) Numéro de dépôt international: PCT/EP2011/060529
(87) Numéro de publication internationale: WO 2011/161204

(56) Documents cités:
- EP-A1- 0 637 572
- EP-A1- 1 285 894
- EP-A2- 1 293 726
- WO-A1-01/28949
- WO-A1-03/050056
- US-A1- 2008 128 071
- DATABASE Chemical Abstracts, Chemi [Online] 1 décembre 1987 (1987-12-01), "Method of manufacture of transparent heat-reflecting doped tin oxide on glass", XP002171526, extrait de CHEMICAL PAN - 221999n & CS 8 405 724 A1 (KAVKA JAN ING CSC [CS] KAVKA JAN [CS]) 13 juin 1985 (1985-06-13)

## Description

La présente invention concerne des vitrages présentant des propriétés isolantes thermiques. L'invention concerne en particulier les vitrages dont les propriétés sont liées à la présence de couches minces transparentes faisant office de filtres sélectifs des longueurs d'ondes transmises.

La production de vitrages offrant des propriétés dites bas-émissives constitue une part significative des améliorations visant à la réduction de la consommation énergétique pour le chauffage des bâtiments. La multiplication des feuilles de verre entrant dans composition de tels vitrages isolants est un moyen d'améliorer leurs performances. Elle n'est pas toujours possible pour des raisons de poids ou d'encombrement. En conséquence l'amélioration des performances des systèmes bas-émissifs utilisés demeure un objectif permanent.

La réduction de l'émissivité ne doit pas altérer de manière significative les autres propriétés exigées des vitrages isolants considérés. En particulier les vitrages doivent conserver une transmission lumineuse aussi élevée que possible et ne pas présenter de coloration en réflexion non acceptable. A titre indicatif les vitrages doivent avoir une réflexion aussi neutre que possible et surtout ne pas présenter de coloration pourpre.

Parallèlement aux propriétés de basse-émissivité, selon notamment les lieux d'utilisation de ces vitrages, d'autres propriétés thermiques sont recherchées simultanément. Dans les régions dans lesquelles il est avantageux de pouvoir profiter de l'énergie solaire pour réchauffer les bâtiments, on s'efforce ainsi d'avoir des vitrages dont le facteur solaire (FS ou également g) est aussi élevé que possible. Ce facteur solaire est la somme de l'énergie solaire transmise directement par le vitrage et de celle qui après absorption est réémise vers l'intérieur du bâtiment.

Deux types principaux de couches bas-émissives sont mis en oeuvre sur les feuilles de verre. Il s'agit d'une part de couches obtenues par pyrolyse gazeuse. Ces couches sont essentiellement à base d'oxydes. D'autre part on utilise des systèmes de couches comportant une ou plusieurs couches métalliques réfléchissant sélectivement les infrarouges, couches métalliques faisant partie d'un ensemble comprenant par ailleurs des couches diélectriques protectrices et contrôlant la sélectivité des filtres constitués. Ces systèmes sont produits essentiellement par des techniques de pulvérisation cathodique.

Le choix des types de couches utilisés dans les vitrages isolants est fonction de multiples critères. Ainsi les couches pyrolytiques présentent l'avantage d'être obtenues directement sur les lignes de production du verre. Leur coût est bien moindre que celui des systèmes de couches déposées par pulvérisation cathodique. Par ailleurs les couches pyrolytiques sont relativement "dures". Elles offrent une bonne résistance aux épreuves mécaniques et/ou chimiques. Cependant ces couches ont des performances en matière d'émissivité qui restent très inférieures à celles des couches déposées par pulvérisation cathodique. A l'inverse ces couches déposées par pulvérisation cathodique sont fragiles -elles sont qualifiées de tendres- et doivent être protégées en conséquence.

L'amélioration de l'émissivité des couches déposées par pulvérisation cathodique conduit à des systèmes toujours plus complexes. Il s'agit notamment de la multiplication des couches métalliques réfléchissantes, et parallèlement, des couches diélectriques qui les accompagnent. Les systèmes les plus complexes ont pour conséquence un coût non négligeable qui doit être rapporté au gain obtenu en termes d'isolation.

Pour les raisons exposées ci-dessus une part significative des vitrages isolants est constituée des vitrages relativement simples comportant deux feuilles de verre dont l'une est revêtue d'un système de couches obtenu par pulvérisation cathodique avec une seule couche mince métallique. Pour protéger ce système de couches, celui-ci est disposé sur une face d'une des feuilles qui n'est pas exposée aux aléas externes, et donc tournée vers l'espace situé entre les deux feuilles.

Les règlementations dans le domaine des économies d'énergie imposent la mise en oeuvre de vitrages sans cesse plus performants. Pour les vitrages isolants à deux feuilles de verre, les limites des possibilités d'amélioration des systèmes de couches sont de plus en plus difficiles à repousser. La recherche de nouvelles solutions reste ouverte.

Les inventeurs ont montré qu'une amélioration sensible des propriétés pouvait être obtenue en mettant en oeuvre des vitrages tels que définis à la revendication 1.

Le choix de disposer sur une même feuille de verre un système de couches déposé par pulvérisation cathodique sur une face et une couche pyrolytique sur l'autre face montre de façon surprenante qu'il est possible d'améliorer le coefficient d'isolation thermique U, en ayant simultanément un facteur solaire g élevé, sans dégrader de façon gênante les autres propriétés notamment la transmission lumineuse ou la neutralité de coloration en réflexion. Ce résultat est d'autant plus remarquable que la présence de plusieurs systèmes de couches disposés sur chacune des deux feuilles comme il sera présenté dans les exemples comparatifs ne permet pas d'atteindre ce résultat.

Il faut aussi souligner que la mise en oeuvre de l'invention nécessite des modalités qui ne sont pas habituelles pour les feuilles de verre comportant l'un ou l'autre de ces systèmes de couches.

Des feuilles de verre dont une face est revêtue d'un système de couches obtenu par pyrolyse, l'autre d'un système de couches obtenu par pulvérisation cathodique, ont été proposées antérieurement, notamment (EP1293726). Ces feuilles de verre étaient destinées à entrer dans la composition de portes de fours à usage domestique. Dans ces applications les feuilles en question faisaient partie d'un ensemble comprenant par exemple trois feuilles de verre dont l'une au moins présentait cette structure. Dans ces applications, la propriété essentielle est bien entendu de faire écran au rayonnement infrarouge. La transmission lumineuse sans être négligeable peut être ramenée à des valeurs relativement modestes, par exemple de l'ordre de 50% ou moins (mesurée selon la norme EN 410). De même la qualité optique de ces produits n'est pas comparable à celle exigée des vitrages architecturaux. En particulier le voile ("haze") correspondant à la fraction de la lumière diffusée par le vitrage peut être significativement plus important pour ces applications. De même encore les colorations en réflexion sont souvent minorées par l'utilisation pour la feuille de verre la plus extérieure par rapport au four, d'un verre fortement coloré.

Pour ces raisons les propriétés requises pour ces applications sont beaucoup moins contraignantes que celles des vitrages architecturaux, et les techniques de préparation peuvent suivre des modalités relativement classiques.

Par opposition à ces propositions antérieures, les vitrages selon l'invention offrent une transmission lumineuse qui reste très élevée. Cette transmission doit tenir compte de l'absorption liée à l'épaisseur des feuilles de verre. Pour des feuilles de verre clair de 4mm d'épaisseur la transmission du vitrage double n'est pas inférieure à 60% de la lumière incidente, mesure effectuée pour un illuminant D65 sous un angle de 2°. Pour des épaisseurs différentes cette valeur doit être corrigée de l'absorption propre du verre.

Le facteur solaire des vitrages selon l'invention est aussi relativement élevé et avantageusement supérieur à 45% (selon la norme EN 410) et pour des verres clair de 4mm d'épaisseur.

L'utilisation éventuelle de vitrage comportant des feuilles de verre dit « extra-clair » conduit nécessairement à l'accroissement de la transmission lumineuse et du facteur solaire dans les proportions propres à ce type de verre.

Toujours vis-à-vis des techniques antérieures, les vitrages selon l'invention doivent présenter un voile aussi réduit que possible et dans tous les cas ce voile ne doit pas être supérieur à 0,7% et de préférence pas supérieur à 0,5% (mesuré par exemple selon la norme ASTM D1003-92).

De façon remarquable, dans les vitrages isolants doubles selon l'invention les deux systèmes de couches doivent se situer de part et d'autre de la même feuille de verre. Les mêmes couches réparties de manière différente, comme il est montré dans les exemples, ne permettent pas d'atteindre les mêmes performances. Ceci conduit également pour les raisons de résistance relative de ces systèmes de couches, à disposer les couches pyrolytiques sur une face externe du double vitrage, les couches obtenues par pulvérisation cathodique se trouvant ainsi tournées vers l'espace situé entre les feuilles de verre.

L'ensemble de couches pyrolytiques est obtenu de façon traditionnelle dans les installations de production de verre "flotté", en appliquant les précurseurs de ces couches directement sur le ruban de verre à température élevée.

L'ensemble pyrolytique étant formé, le ruban de verre est découpé et les feuilles sont traitées en "reprise" dans les installations de pulvérisation cathodique. Dans ces opérations la feuille à revêtir repose sur un train de rouleaux dans sa progression sous les différentes cathodes utilisées pour former les différentes couches. La face au contact des rouleaux est celle précédemment revêtue par pyrolyse. En dépit de sa dureté relative le contact de la couche avec les rouleaux est susceptible d'imprimer des traces de frottement sur cette couche dont la surface est relativement rugueuse. Ces traces sont sans grande importance pour les applications "fours". Elles ne sont pas acceptables pour les vitrages architecturaux.

Les couches pyrolytiques, du fait même de leur rugosité superficielle, présentent aussi ordinairement un voile non négligeable. Pour atténuer ces irrégularités de surface, il est connu de procéder à un polissage de ces couches. A l'expérience, la mise en oeuvre d'un tel polissage permet selon l'invention d'éliminer la majeure partie des rugosités qui sont à l'origine des traces de frottement générées au cours de l'opération de transport dans les installations de dépôt par pulvérisation cathodique.

Selon l'invention il est donc souhaitable une fois la couche pyrolytique constituée, et de préférence avant de procéder au dépôt par pulvérisation cathodique, de soumettre cette couche au polissage en question. Le polissage de la couche pyrolytique est avantageusement tel que la rugosité Ra après polissage n'est pas supérieure à 10nm et de préférence pas supérieure à 6nm.

Dans la pratique le polissage réduit sensiblement le voile introduit par la présence de la couche pyrolytique. Initialement, selon les couches pyrolytiques considérées, ce voile se situe environ entre 0,4 et 0,8% de la lumière transmise. S'il est admis communément que les vitrages pour les applications architecturales ne doivent pas présenter un voile supérieur à 0,7%, le polissage effectué dans les conditions connues permet de ramener le voile de préférence à une valeur égale ou inférieure à 0,5% et de préférence égale ou inférieure à 0,3%.

Pour parvenir aux meilleures performances il est nécessaire dans les vitrages selon l'invention de mettre en oeuvre simultanément les meilleures couches pyrolytiques et les meilleures couches déposées par pulvérisation cathodique. Pour les couches pyrolytiques on utilise avantageusement une couche à base d'oxyde d'étain dopé. De manière connue l'agent dopant est soit du fluor soit de l'antimoine.

Toujours de manière connue, la couche d'oxyde d'étain dopé, doit présenter une certaine épaisseur. Cette épaisseur garantit une action sélective sur les infrarouges tout en permettant de maintenir une bonne neutralité de couleur en réflexion. Cette épaisseur est d'au moins 200nm, mais la neutralité n'est au mieux que pour des épaisseurs discrètes qui peuvent varier en fonction de la nature exacte de la composition de ces couches.

Pour améliorer notamment la neutralité en réflexion des couches pyrolytiques et favoriser la transmission lumineuse, il est connu d'associer à la couche constituant le filtre infrarouge, au moins une autre couche située sous la première et d'indice de réfraction intermédiaire entre celui du substrat verrier et celui de la couche filtrant sélectivement les infrarouges. Ces couches favorisent notamment la neutralisation et la suppression des variations de teintes selon l'angle d'observation. Des couches traditionnelles connues sont constituées d'oxydes, ou de combinaisons de couches d'oxydes, notamment d'ensembles de couches d'oxyde de titane et d'oxyde de silicium, ou d'oxyde d'étain et d'oxyde de silicium ou d'oxy-carbure de silicium SiOxCy. A noter l'existence de couches d'oxycarbure de silicium dans la littérature antérieure (WO03/050056). Ces couches, ou ensembles de couches, sont également produits par pyrolyse directe sur le ruban de verre dans les installations de flottage ou à la sortie de celles-ci.

Les meilleures dispositions concernant les couches pyrolytiques, telles que celles indiquées ci-dessus, conduisent pour ces systèmes à des valeurs d'émissivité qui pour une application sur une feuille de verre flotté claire ordinaire de 4mm d'épaisseur ne sont pas supérieures à 0,20 et de préférence pas supérieures à 0,15, et de façon particulièrement préférée égales ou inférieures à 0,10.

Si la constitution de la couche pyrolytique impose quelques précautions, il en est de même pour ce qui concerne les couches formées par pulvérisation cathodique. En particulier la face du verre sur laquelle le dépôt est réalisé est nécessairement celle au contact du bain d'étain dans la fabrication de la feuille de verre. On sait que cette face est susceptible de réagir avec les couches déposées. Des diffusions peuvent intervenir qui altèrent la qualité des couches en question. Pour cette raison lorsqu'un seul système de couches est présent sur une feuille de verre, on s'efforce de procéder au dépôt sur la face "air" de la feuille de verre.

Pour les feuilles selon l'invention, la seule face disponible pour le dépôt est la face "étain". Il est donc préférable que le système de couches déposé soit protégé contre les altérations possibles du fait de diffusions indésirables. Avantageusement cette protection est assurée par le biais de couches interposées entre la couche métallique réfléchissant les infrarouges et la feuille de verre. Des couches protectrices sont par exemple des couches à base de SiO₂, Si₃N₄, ou toute autre couche connue pour ce type de propriété, notamment les couches à base d'oxyde d'étain, ou d'oxydes d'alliage zinc/étain.

Comme indiqué plus haut il est nécessaire de constituer un ensemble par pulvérisation cathodique qui soit aussi performant que possible en matière d'émissivité sans nécessiter la mise en oeuvre de systèmes coûteux. En particulier il est préféré, pour cette dernière raison notamment, d'utiliser un système de couches ne comprenant qu'une seule couche d'argent. Lorsqu'une seule couche à base d'argent est présente dans ces systèmes, cette couche a une épaisseur qui est de 10 à 15nm.

Les systèmes de couches obtenus par pulvérisation cathodique qui sont simultanément neutres en réflexion et présentent les meilleures émissivités, permettent d'atteindre des émissivités égales ou inférieures à 0,01. Ces systèmes sont très sensiblement plus efficaces que les systèmes pyrolytiques dont il est question ci-dessus.

La combinaison des systèmes de couches selon l'invention permet d'atteindre des valeurs de coefficients thermiques particulièrement bas, en ayant simultanément un facteur solaire suffisant.

Les classifications commerciales des vitrages sont l'objet de normes et sont généralement basées sur les valeurs des coefficients U. Les vitrages selon l'invention permettent de franchir des seuils jusqu'alors inaccessibles pour les vitrages doubles du type considéré. Ainsi pour un vitrage composé de deux feuilles de verre clair de 4mm d'épaisseur chacune, distantes de 15mm, l'espace étant rempli d'un mélange gazeux comportant 90% d'argon, les coefficients U atteints selon l'invention peuvent être égaux à 0,9W/m².K (norme EN 673).

Toujours pour les vitrages doubles selon l'invention avec des feuilles de verre clair ordinaire d'épaisseur 4mm, comportant les meilleurs systèmes de couches, le facteur solaire obtenu est au moins de 45%.

Le choix de la nature des couches et de leurs épaisseurs est tel qu'avec un illuminant D65 et sous 2°, les vitrages selon l'invention pour les mêmes épaisseurs de 4mm, présentent en réflexion vers l'extérieur des coordonnées colorimétriques dans le système CIELAB soient avantageusement:
- 6 ≤ a* ≤ 3
- 6 ≤ b*≤ 3.

L'invention est décrite de manière détaillée en faisant référence à la planche de dessins dans laquelle :
- la figure 1 est une vue en coupe schématique représentant un vitrage isolant de l'art antérieur ;
- la figure 2 est une vue d'une structure ne correspondant pas à l'invention, établie à titre de comparaison ;
- la figure 3 est une structure d'un autre exemple comparatif ;
- la figure 4 est une vue d'un vitrage selon l'invention.

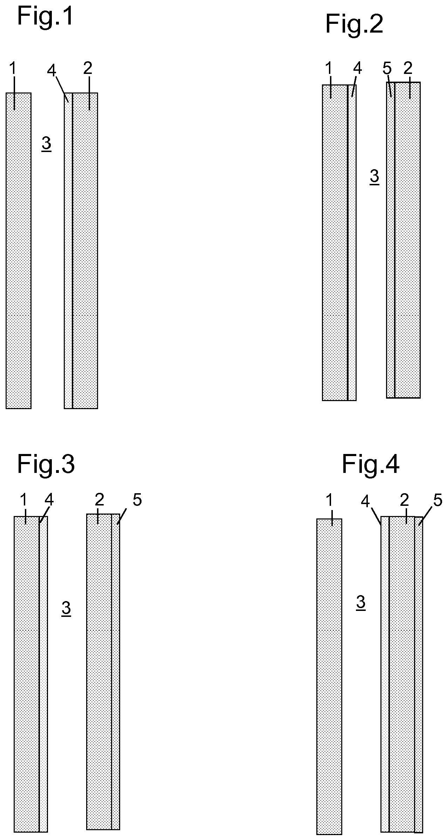

Les vitrages isolants les plus usuels à l'heure actuelle sont du type représenté à la figure 1. Ils sont constitués de deux feuilles de verre (1, 2) enfermant dans un espace clos une lame gaz (3), le plus fréquemment de l'argon choisi pour son faible coefficient de conduction thermique. Les faces des feuilles de verre sont traditionnellement numérotées en commençant par celle tournée vers l'extérieur du bâtiment. Un système de couches bas-émissif (4) est appliqué en position 3. Ce système est usuellement constitué d'un ensemble comprenant une couche mince métallique, le plus souvent à base d'argent, cette couche étant comprise dans un ensemble de couches diélectriques protégeant la couche métallique. La couche métallique réfléchit sélectivement les infrarouges. Les couches diélectriques protègent la couche métallique contre les dégradations diverses provenant par exemple de diffusion d'ions à partir de la feuille de verre, ou d'oxygène au moment de la production des couches superposées à la couche métallique ou postérieurement à cette production, notamment lors de traitements thermiques. Les couches diélectriques ont encore pour fonction de limiter la réflexion des rayons des longueurs d'onde visible, et de maintenir une neutralité de couleur en réflexion.

Les systèmes de couches les plus performants pour les propriétés bas-émissives sont du type déposé par pulvérisation cathodique. Ces systèmes fragiles aux agressions mécaniques sont disposés dans l'espace situé entre les deux feuilles de verre.

Les systèmes bas-émissifs peuvent aussi comporter plusieurs couches métalliques réfléchissantes. Le gain en terme de propriétés bas-émissive est relativement limité par rapport aux meilleurs systèmes ne comportant qu'une couche métallique. Le bénéfice de la pluralité de couches métalliques réside essentiellement dans un meilleur contrôle de la réflexion des longueurs d'ondes visibles, et par suite de la neutralité en réflexion.

Les vitrages isolants traditionnels, dans les conditions optimisées présentent par exemple des systèmes de couches tels que ceux décrits dans la publication WO 2006/097513, et notamment présentant la structure :
verre/ TiO₂/TiO₂-ZrO₂/ZnO/Ag/TiOx/ZnO/SnO₂.
Une feuille de verre clair de 3,45mm d'épaisseur revêtue de ce système de couches, comprenant une couche d'argent de 12nm peut atteindre une émissivité de 0,01. Un double vitrage de deux feuilles de verre de 3,85mm l'une étant revêtue de la couche précédente, les deux feuilles distantes de 15mm, l'espace entre ces feuilles étant rempli d'argon à 90%, permet d'atteindre un coefficient de transmission thermique U, défini selon la norme EN 673, d'au mieux 1,0 et une transmission lumineuse de 70%, avec un facteur solaire, selon la norme EN 410, de 50%.

Les systèmes "low-e" (bas-émissifs) pyrolytiques les plus usuels comportent une couche d'oxyde d'étain dopé, déposée sur une première couche ayant pour rôle de neutraliser la couleur en réflexion. La couche au contact du verre est ordinairement une couche de silice (ou d'oxy-carbure de silicium) éventuellement modifiée par des additifs. Les couches d'oxyde d'étain comparées aux systèmes déposés par pulvérisation cathodique, sont relativement épaisses, plus de 200nm, et pour certaines plus de 450nm. Ces couches épaisses sont suffisamment résistantes pour supporter d'être exposées à des épreuves mécaniques et/ou chimiques. Contrairement aux couches déposées par pulvérisation cathodique elles ne sont pas nécessairement enfermées dans un double vitrage. Leurs performances en matière d'émissivité sont bien moindres que celles des couches déposées par pulvérisation cathodique et comportant une couche métallique. Les coefficients U pour les plus performants sont de l'ordre de 0,15 ou au mieux 0,10. Pour cette raison les couches pyrolytiques ne sont pas recherchées pour les vitrages qui doivent atteindre des émissivités extrêmes.

Les performances de ce vitrage double sont reportées au tableau 1, exemple 1.

La figure 2 présente un vitrage utilisé à titre de comparaison. Il comprend pour un vitrage double toujours avec des feuilles de 3,85mm d'épaisseur distantes de 15mm, l'espace étant rempli d'argon (90%), l'association de deux systèmes (4, 5) de couches respectivement du type obtenu par pulvérisation cathodique et par pyrolyse. Les couches sont disposées dans l'espace entre les deux feuilles de verre (1, 2) respectivement dans les positions 2 et 3.

Pour le low-e pyrolytique la couche utilisée est constituée d'une couche d'oxyde d'étain dopée au fluor (2% atomique) de 470nm d'épaisseur. Cette couche repose sur une couche d'oxy-carbure de silicium SiOxCy de 75nm d'épaisseur. Individuellement l'émissivité de ce système déposé sur une feuille de verre de 4mm s'établit à 0,10. La couche obtenue par pulvérisation cathodique est la même que celle indiquée ci-dessus à propos de la figure 1.

Les performances sont reportées au tableau 1, exemple 2.

Dans une variante la position des deux couches est intervertie. Les résultats ne sont pas modifiés (exemple 2').

La structure de la figure 3, montre à titre comparatif un vitrage double dans lequel les deux couches sont aussi chacune sur une des deux feuilles du vitrage, la couche pyrolytique (5) étant en position 4. Les couches sont celles présentées précédemment. Les résultats sont ceux reportés à l'exemple 3 du tableau 1.

La figure 4 correspond à une configuration d'un vitrage selon l'invention toujours pour deux feuilles de verre de 3,85mm d'épaisseur distantes de 15mm et un remplissage à 90% d'argon. Les couches pyrolytiques et celles déposées par pulvérisation cathodique sont disposées respectivement en position 4 et 3. Le système pyrolytique dur reste donc exposé à l'extérieur tandis que le système de couches déposées par pulvérisation cathodique est protégé dans l'espace entre les deux feuilles de verre. La composition des couches est celle indiquée précédemment.

Les propriétés sont celles indiquées à l'exemple 4 du tableau 1.

**Tableau 1.**

| exemple | TL | Rext. | TE | RE | AE | g | TL/g | U |
|---|---|---|---|---|---|---|---|---|
| 1 | 70 | 20 | 41 | 38 | 21 | 50 | 1,40 | 1,0 |
| 2 | 62 | 24 | 36 | 39 | 25 | 43 | 1,44 | 1,0 |
| 2' | 62 | 20 | 36 | 28 | 36 | 44 | 1,41 | 1,0 |
| 3 | 62 | 23 | 36 | 39 | 25 | 43 | 1,44 | 0,9 |
| 4 | 62 | 21 | 36 | 38 | 26 | 49 | 1,26 | 0,9 |

Les propriétés de transmission visible, TL, et de réflexion vers l'extérieur, Rext., sont données pour un illuminant D65 sous 2°. Les propriétés énergétiques de transmission, TE, de réflexion, RE, d'absorption, AE, et le facteur solaire, g, sont mesurées selon la norme EN410. Le rapport TL/g est mesure de la sélectivité du vitrage. Le coefficient de transmission thermique U, est exprimé en W/m².K.

La disposition selon l'invention des deux systèmes de couches sur la même feuille conduit à un coefficient de transmission thermique identique pour les exemples 3 et 4, mais le facteur solaire est significativement accru de près de 15% dans le cas correspondant à l'invention. Ces vitrages sont donc particulièrement utiles dans les régions ou en plus d'une protection contre les pertes thermiques, le bénéfice de l'énergie solaire récupérée est un facteur important.

Des vitrages doubles ont été aussi réalisés avec des feuilles de verre plus épaisses. Chaque feuille présente une épaisseur de 5,85mm. L'espacement entre les feuilles est maintenu à 15mm et le remplissage est de nouveau d'argon à 90%.

Les structures des exemples précédents sont reproduites à l'exception de celles des exemples 2 et 2'. Les exemples sont numérotés respectivement ibis, 3bis et 4bis, seul le dernier correspondant à un mode de réalisation selon l'invention.

Les propriétés de ces exemples sont rapportées au tableau 2.

**Tableau 2.**

| | TL | Rext. | TE | RE | AE | g | TL/g | U |
|---|---|---|---|---|---|---|---|---|
| 1bis | 68 | 20 | 39 | 34 | 27 | 49 | 1,39 | 1,0 |
| 3bis | 61 | 23 | 34 | 36 | 30 | 42 | 1,45 | 0,9 |
| 4bis | 61 | 21 | 34 | 35 | 31 | 48 | 1,27 | 09 |

Comme précédemment on constate que la structure selon l'invention permet d'obtenir simultanément un coefficient de transmission thermique avantageux et un facteur solaire relativement élevé tout en conservant une transmission lumineuse importante.

## Revendications

1. Vitrage isolant double, les faces des feuilles de verre étant numérotées depuis la face tournée vers l'extérieur, la feuille dont les faces sont en position 3 et 4 étant revêtue sur chacune d'un ensemble de couches basse-émissives, la face en position 3 étant revêtue par des couches produites par pulvérisation cathodique et comprenant au moins une couche métallique à base d'argent d'une épaisseur de 10 à 15 nm réfléchissant les infrarouges, la face en position 4 comportant une ou plusieurs couches d'oxydes métalliques déposées par pyrolyse gazeuse dont une couche d'oxyde d'étain dopé à l'antimoine ou au fluor d'au moins 200nm d'épaisseur au moins une couche ou ensemble de couches d'oxyde dont l'oxyde de titane et l'oxyde de silicium, l'oxyde d'étain et l'oxyde de silicium ou l'oxycarbure de silicium, étant située sous la couche d'oxyde d'étain dopé, ce vitrage présentant une transmission lumineuse qui n'est pas inférieure à 60% pour des épaisseurs des feuilles de verre clair de 4 mm.

2. Vitrage selon la revendication1 dont la surface de la couche pyrolytique est soumise à un polissage tel qu'elle présente une rugosité Ra inférieure à 10nm.

3. Vitrage selon l'une des revendications précédentes dans lequel l'espace situé entre les deux feuilles de verre est rempli d'un gaz à faible conduction thermique.

4. Vitrage selon la revendication 3 dans lequel le gaz est constitué au moins à 90% d'argon.

5. Vitrage selon l'une des revendications précédentes dont le coefficient U est au plus égal à 0,9.

6. Vitrage selon l'une des revendications précédentes dans lequel la coloration en réflexion est telle que dans le système CIELAB sous un illuminant D65 et sous 2°, les coordonnées colorimétriques sont telles que :
- 6 ≤ a* ≤ 3
- 6 ≤ b*≤ 3

7. Vitrage selon l'une des revendications précédentes dans lequel le facteur solaire est au moins égal à 45% pour des épaisseurs des feuilles de verre clair de 4 mm.

## Patentansprüche

1. Doppelisolierverglasung, wobei die Seiten der Glasscheiben ausgehend von der nach außen gewandten Seite nummeriert sind, wobei die Scheibe, deren Seiten sich an Position 3 und 4 befinden, auf jeder davon mit einem Satz von Schichten mit niedrigem Emissionsgrad beschichtet ist, wobei die Seite an Position 3 mit Schichten beschichtet ist, die durch Kathodenzerstäubung erzeugt werden und mindestens eine infrarotreflektierende Metallschicht auf Basis von Silber mit einer Dicke von 10 bis 15 nm umfassen, wobei die Seite an Position 4, die eine oder mehrere Metalloxidschichten, die durch Gaspyrolyse abgeschieden werden, darunter eine mit Antimon oder Fluor dotierte Zinnoxidschicht mit mindestens 200 nm Dicke, mindestens eine Oxidschicht oder einen Satz von Oxidschichten, darunter Titanoxid und Siliciumoxid, Zinnoxid und Siliciumoxid oder Siliciumoxicarbid umfasst, unter der dotierten Zinnoxidschicht liegt, wobei diese Verglasung eine Lichtdurchlässigkeit von nicht weniger als 60 % für Dicken von Klarglasscheiben von 4 mm aufweist.

2. Verglasung nach Anspruch 1, wobei die Oberfläche der pyrolytischen Schicht poliert wird, so dass sie eine Rauhigkeit Ra von weniger als 10 nm aufweist.

3. Verglasung nach einem der vorhergehenden Ansprüche, wobei der Raum, der zwischen den beiden Glasscheiben liegt, mit einem Gas mit geringer Wärmeleitfähigkeit gefüllt ist.

4. Verglasung nach Anspruch 3, wobei das Gas zu mindestens 90 % aus Argon besteht.

5. Verglasung nach einem der vorhergehenden Ansprüche, wobei der Koeffizient U höchstens gleich 0,9 ist.

6. Verglasung nach einem der vorhergehenden Ansprüche, wobei die Farbe in der Reflexion derart ist, dass im CIELAB-System unter einem Leuchtmittel D65 und unter 2° die Farbkoordinaten derart sind, dass:
- 6 ≤ a* ≤ 3
- 6 ≤ b* ≤ 3

7. Verglasung nach einem der vorhergehenden Ansprüche, wobei der g-Wert für Dicken der Klarglasscheiben von 4 mm mindestens gleich 45 % ist.

## Claims

1. Insulating double glazing, the faces of the glass sheets being numbered starting from the face turned toward the outside, the sheet whose faces are in position 3 and 4 being coated on each face with a set of low-emissivity layers, the face in position 3 being coated with layers produced by cathode sputtering and comprising at least one infrared-reflecting silver-based metal layer with a thickness of 10 to 15 nm, the face in position 4 comprising one or more layers of metal oxides deposited by gas pyrolysis including a layer of tin oxide doped with antimony or with fluorine having a thickness of at least 200 nm, at least one oxide layer or set of oxide layers including titanium oxide and silicon oxide, tin oxide and silicon oxide or silicon oxycarbide, being located under the doped tin oxide layer, this glazing having a light transmission which is not less than 60% for thicknesses of the clear glass sheets of 4 mm.

2. Glazing according to Claim 1, the surface of the pyrolytic layer of which is subjected to polishing such that it has a roughness Ra of less than 10 nm.

3. Glazing according to one of the preceding claims, wherein the space located between the two glass sheets is filled with a gas having a low thermal conductivity.

4. Glazing according to Claim 3, wherein the gas consists, at least to 90%, of argon.

5. Glazing according to one of the preceding claims, the U coefficient of which is at most equal to 0.9.

6. Glazing according to one of the preceding claims, wherein the colour in reflection is such that in the CIELAB system under an illuminant D65 and under 2°, the colorimetric coordinates are such that:
- 6 ≤ a* ≤ 3
- 6 ≤ b*≤ 3

7. Glazing according to one of the preceding claims, wherein the solar factor is at least equal to 45% for thicknesses of the clear glass sheets of 4 mm.
